# EUROPÄISCHE PATENTSCHRIFT

(11) **EP 3 919 415 B1**
(45) Veröffentlichungstag und Bekanntmachung des Hinweises auf die Patenterteilung: **03.09.2025**
(21) Anmeldenummer: 21173617.8
(22) Anmeldetag: 12.05.2021
(51) Int. Cl.: B65G 1/04, B65G 1/127

(54) **SYSTEM UND VERFAHREN ZUM VERSORGEN EINES DYNAMISCHEN REGALS MITTELS EINEM PORTALROBOTER**
SYSTEM AND METHOD FOR SUPPLYING A DYNAMIC SHELF BY MEANS OF A PORTAL ROBOT
SYSTÈME ET PROCÉDÉ DE FOURNITURE D'UN RAYONNAGE DYNAMIQUE À L'AIDE D'UN ROBOT PORTAIL

(30) Priorität: 03.06.2020 DE 102020114743
(43) Veröffentlichungstag der Anmeldung: 08.12.2021
(73) Patentinhaber: SSI Schäfer s.r.o., 75301 Hranice (CZ)
(72) Erfinder: Giarrusso, Marco, 5726 Unterkulm (CH)
(74) Vertreter: Witte, Weller & Partner Patentanwälte mbB

(56) Entgegenhaltungen:
- CH-A5- 678 940
- CH-A5- 688 821
- DE-A1- 3 631 602
- DE-B4- 10 225 332
- US-A1- 2004 101 386

## Beschreibung

Die vorliegende Offenbarung wird in der Intralogistik benutzt und betrifft allgemein ein Lager- und Kommissioniersystem für Artikel sowie ein Verfahren zum Versorgen desselben mit den Artikeln. Die vorliegende Offenbarung betrifft insbesondere ein System zum direkten oder indirekten (mittels Ladungsträgern) Versorgen eines dynamischen Regals (Paternoster oder Lagerlift) mit den Artikeln über einen Portalroboter und eine Fördertechnik sowie ein entsprechendes Verfahren.

Unter einem "Portalroboter" wird allgemein ein (Industrie-)Roboter verstanden, der an ein portalartiges Gestell (Portalgestell) gekoppelt ist, um seine Greifeinheit (Endeffektor) in einem kubischen Arbeitsraum zu bewegen, der durch drei translatorische (kartesische) Bewegungsachsen (XYZ) des Roboters aufgespannt wird. Im Allgemeinen sind Roboter universell einsetzbare Bewegungsautomaten mit mehreren translatorischen und/oder rotatorischen Achsen. Die Bewegung der Roboter sind in Bezug auf Bewegungsfolgen und Bewegungswege frei programmierbar und ggf. sensorgeführt. Die Roboter sind mit Greifern, Werkzeugen und/oder anderen Fertigungsmitteln ausrüstbar und können Handhabungs- und/oder Fertigungsaufgaben ausführen.

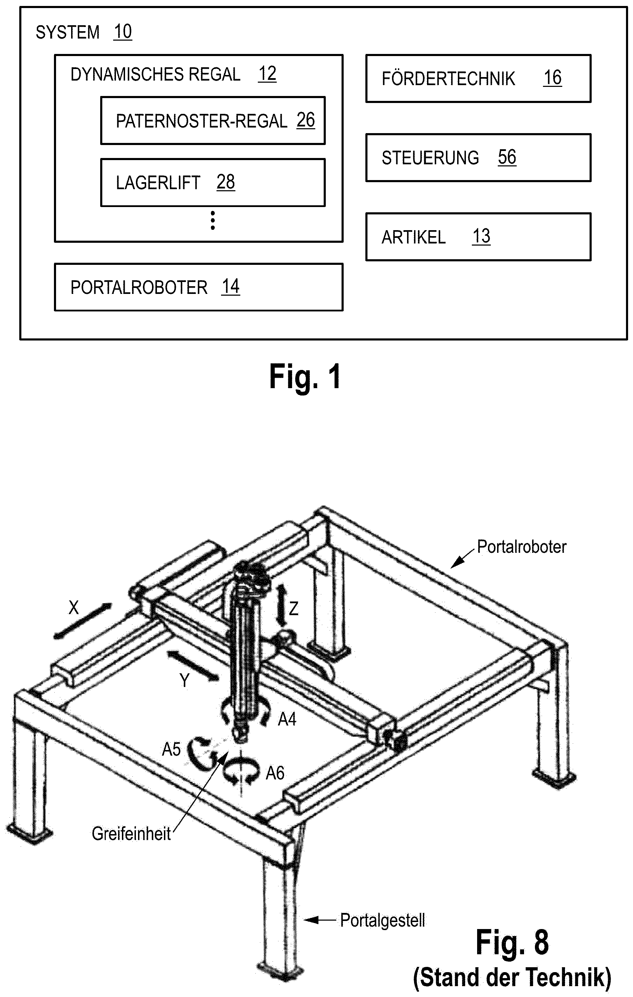

In Fig. 8 ist ein herkömmlicher Portalroboter gezeigt, der in diesem Fall ein stationäres (Portal-)Gestell mit vier stationären Vertikalstützen, zwei stationäre Längsträgern und zwei stationäre Querträgern zeigt, auf denen ein beweglicher Querträger gelagert ist, an den ein vertikal beweglicher Mast gekoppelt ist. Der Mast ist an einen Schlitten gekoppelt. Der Schlitten ist an den Querträger gekoppelt, der in der Längsrichtung X beweglich ist. Die drei translatorischen Hauptachsen (A1-A3, nicht gezeigt) werden bei Protalrobotern mit X (Längsrichtung), Y (Querrichtung) und Z (Vertikalrichtung) bezeichnet. Ferner sind in der Fig. 8 drei Rotationsachsen A4-A6 für die Greifeinheit angedeutet. Die Schlitten für den beweglichen Querträger und den Mast werden typischerweise mit Elektromotoren angetrieben, wobei eine Kraftübertragung z.B. durch Zahnriemen, Zahnstangen oder Spindeln erfolgt. Alternativ können Linearmotor-Direktantriebe oder Pneumatikantriebe eingesetzt werden.

Die Fig. 8 zeigt ein Vollportal. Ferner gibt es Halbportale, die auf nur zwei Vertikalstützen stehen, die (optional) beweglich auf einem Boden gelagert sein können. Das Vollportal der Fig. 8 wird auch als Flächenportal bezeichnet, weil eine große horizontale Fläche abgedeckt werden.

Unter "dynamischen Regalen " sind allgemein Regale zu verstehen, die ein stationäres Regalgestell und bewegliche Lagerplätze aufweisen. Ein Lagerplatz wird durch einen Ort (Position) und die technischen Mittel (normalerweise Regalböden) definiert, die benötigt werden, um einen oder mehrere Artikel an diesem Ort zu lagern. Dynamische Regale sind in sich geschlossenen Einheiten, die zum Kommissionieren eingesetzt werden. Dynamische Regale arbeiten nach dem "Ware-zur-Person"-Prinzip, wobei der Lagerplatz zur (Kommissionier-)Person bewegt wird, damit die Person Artikel gemäß Kommissionieraufträgen aus den Lagerplätzen entnehmen kann. Die Person bewegt sich vom Entnahmeort weg.

Paternoster-Regale und Lagerlifte sind typische Vertreter von dynamischen Regalen, die ein Gehäuse mit einer einzigen Bedienöffnung aufweisen, die üblicherweise in Bodenhöhe angeordnet ist. Ein Vorteil dieser dynamischen Regale ist in ihrer Einsparung von Bodenfläche und in einer Verkürzung oder einem Wegfall von Kommissionierwegen zu sehen. Im Paternoster-Regal laufen die Regalböden endlos um. Im Lagerlift werden die Regalböden innerhalb eines starren Regalgestells umgesetzt, um der Person den Zugriff auf die Lagerplätze zu ermöglichen.

Die Versorgung der dynamischen Regale mit neuen einzulagernden Artikeln (Nachschub), d.h. eine Einlagerung, erfolgt klassisch über den gleichen Ort wie die Entnahme. Dies bedeutet, dass die Einlagerung an dem Ort erfolgt, wo die Person die Artikel auch üblicherweise zum Zwecke der Kommissionierung entnimmt. Deshalb können herkömmliche dynamische Regale entweder nur in einem Auslager- bzw. Kommissioniermodus oder in einem Einlager- bzw. (Nach-)Füllmodus betrieben werden. Ein gleichzeitiger Betrieb in beiden Modi ist nicht möglich. Dies bedeutet mit anderen Worten, dass üblicherweise nicht gleichzeitig auf unterschiedliche Lagerplätze zugegriffen werden kann, auch wenn grundsätzlich mehr als eine Kommissionieröffnung möglich ist.

Das Dokument DE 36 31 602 A1 offenbart eine Regalanordnung gemäß dem Oberbegriff des Anspruchs 1.

Das Dokument DE 102 25 332 A1 offenbart einen Einlagerungspuffer sowie ein Verfahren zum Einlagern von Stückgütern für ein automatisiertes Stückgutlager.

Das Dokument US 2008/0 213 080 A1 offenbart ein kompaktes Lagersystem und seine Anwendung.

Das Dokument CH 688 821 A5 offenbart eine Lageranlage.

Das Dokument US 2004/101386 A1 offenbart ein vertikales Karussell mit oberen und seitlichen Zugriffsstationen.

Das Dokument CH 688 821 A5 offenbart eine Lageranlage.

Deshalb ist eine Aufgabe, ein System und ein Verfahren bereitzustellen, die die Versorgung eines dynamischen Regals verbessern.

Diese Aufgabe wird gelöst durch ein System gemäß Anspruch 1.

Das dynamische Regal wird von oben mit neuen Artikeln versorgt. Neue Artikel können dabei entweder auf der Lagereinrichtung (z.B. auf einem Regalboden) selbst oder in Ladungsträgern (z.B. Lagerbehältern) gelagert sein. Während in einem tiefer gelegenen Bereich des dynamischen Regals kommissioniert wird, kann der Nachschub mit neuen Artikeln von oben erledigt werden. Das dynamische Regal kann also in beiden Betriebsmodi (Kommissioniermodus/Auslagerung und Befüllmodus/Einlagerung) gleichzeitig betrieben werden, ohne dass sich die entsprechenden Vorgänge wechselseitig stören.

Da der Nachschub mit neuen Artikeln von oben erfolgt, wird für den Nachschub keine Bodenfläche benötigt. Dies bedeutet, dass die technischen Einrichtungen in einem oberen Bereich bzw. Abschnitt des dynamischen Regals angeordnet werden, wohingegen die Kommissionierung üblicherweise in einem unteren Abschnitt des dynamischen Regals erfolgt. Die (Kommissionier-)Personen können sich weiterhin frei bewegen. Kollisionen mit der Fördertechnik, die für den Nachschub benötigt wird, sind ausgeschlossen. Der Raum, der für die Kommissionierung benötigt wird, wird nicht eingeschränkt.

Vorzugsweise ist der Portalroboter eingerichtet, solche der Lagereinrichtungen, Artikel und/oder Ladungsträger auszutauschen, die auf einem höchsten Lagerniveau, das belegt ist, im dynamischen Regal positioniert sind, wobei das höchste belegte Lagerniveau im dynamischen Regal befüllungsabhängig ist. Das höchste belegte Niveau muss nicht zwingend das höchst mögliche (oberste) Lagerniveau sein.

Insbesondere im Falle eines Lagerlifts sind nicht alle Lagerniveaus zwingend mit Regalböden bestückt, d.h. belegt. Wenn der Lagerlift nicht vollständig befüllt ist, können obere Lagerplätze leer sein, so dass das in der Höhenrichtung höchste, belegte Lagerniveau tiefer als das höchst mögliche, d.h. oberste, Lagerniveau liegen kann. In diesem Fall muss die Greifeinheit des Portalroboters tiefer in das dynamische Regal abgesenkt werden, um die Artikel zu greifen. Zu diesem Zweck kann der Portalroboter einen Mast umfassen, an dem die Greifeinheit vertikal beweglich gelagert ist. Die Greifeinheit kann in diesem Fall einen größeren Hub als normal ausführen.

Es versteht sich, dass in diesem Fall oberhalb des dynamischen Regals ausreichend Raum vorzusehen ist, um den Mast bei einem Zugriff auf das höchst mögliche Lagerniveau entsprechend zu verfahren.

Insbesondere ist also das höchste belegte Lagerniveau im dynamischen Regal ein höchst mögliches Lagerniveau des dynamischen Regals, wobei das höchstmögliche Lagerniveau befüllungsunabhängig ist.

Diese Konfiguration gilt für beide Typen des dynamischen Regals, also für den Lagerlift und das Paternoster-Regal. Alle Lagerplätze sind mit Lagereinrichtungen bestückt, wenn auch nicht jeder Lagerplatz mit Artikeln bestückt ist. In diesem Fall benötigt der Portalroboter keinen Mast, da die Greifeinheit immer nur auf das oberste Lagerniveau zugreifen kann. In diesem Fall reicht ein minimaler Hub für die Greifeinheit aus, um z.B. im Lagerlift die Artikel vom obersten Regalboden zu greifen oder die Artikel dort abzusetzen.

Wenn der Austausch der Artikel nur über das oberste Lagerniveau erfolgt, muss oberhalb des Portalroboters kein Raum vorgesehen werden, um dem (nicht vorhandenen) Mast einen Ausweichraum bereitzustellen. Dies bedeutet, dass der insgesamt zur Verfügung stehende Raum maximal zu Lagerzwecken, also durch das dynamische Regal, genutzt werden kann.

Neben der optimalen Raumausnutzung kann der Portalroboter einfacher gebaut werden, weil die Greifeinheit einen geringeren Hub ausführen muss.

Bei einer weiteren bevorzugten Ausgestaltung ist das dynamische Regal ein Lagerlift, der innen einen Vertikalförderer mit einem vertikal beweglichen Lastaufnahmemittel umfasst, wobei die beweglichen Lagereinrichtungen, insbesondere tablarartige, Regalböden sind, wobei das Regalgestell ferner unbewegliche Aufnahmeelemente zum Halten der Regalböden umfasst, wobei der Vertikalförderer stationär, vorzugsweise mittig, relativ zum Regalgestell angeordnet ist, so dass das Lastaufnahmemittel die Regalböden zum Einlagern horizontal in die Aufnahmeelemente bewegen kann und zum Auslagern horizontal aus den Aufnahmeelementen bewegen kann und so dass das Lastaufnahmemittel die Regalböden vertikal auf ein höchst mögliches Lagerniveau des dynamischen Regals bewegen kann.

Bei dieser Konfiguration sind die Lagerplätze durch umsetzbare Regalböden realisiert sind, auf denen die Artikel entweder direkt abgelegt werden können oder in Ladungsträgern, wie z.B. Lagerbehältern, gelagert werden können.

Das Portalgestell umfasst insbesondere Längsträger, die vorzugsweise von mindestens vier stationären Vertikalstützen getragen werden, wobei ein Querträger von den Längsträgern in der Längsrichtung des dynamischen Regals beweglich getragen wird, und wobei die Fördertechnik Abschnitte in einem oberen Abschnitt des dynamischen Regals umfasst und sich, vorzugsweise vollständig, entlang der Längsrichtung und Querrichtung des dynamischen Regals, vorzugsweise direkt, benachbart zum dynamischen Regal erstreckt, so dass die Greifeinheit die Lagereinrichtungen, Artikel und/oder Ladungsträger im Wesentlichen ohne Hub mit der Fördertechnik austauschen kann.

Somit erfolgt nicht nur der Zugriff auf Artikel im Regal im Wesentlichen ohne Hub, sondern auch der Zugriff auf Artikel, die sich auf der Fördertechnik befinden. Die Fördertechnik ist im oberen Bereich der Regale angeordnet, so dass die Greifeinheit beim Aufnehmen und Abgeben von Artikeln von der Fördertechnik im Wesentlichen ebenfalls keinen Hub durchführen muss.

Weiter ist es von Vorteil, wenn die Fördertechnik ferner einen regalexternen Vertikalförderer umfasst, der die Abschnitte der Fördertechnik im oberen Abschnitt des dynamischen Regals mit einem weiteren Abschnitt der Fördertechnik in einem unteren Abschnitt des Regals verbindet.

In diesem Fall werden die oberen Abschnitte der Fördertechnik zur Versorgung des Regals benutzt, wohingegen der untere Abschnitt zu Kommissionierzwecken benutzt wird. Dies bedeutet, dass in den oberen Abschnitten der Fördertechnik solche Artikel zum Regal hin transportiert werden, die für den Nachschub benötigt werden. Im unteren Abschnitt der Fördertechnik werden die Artikel vom Regal weg befördert, die zu Kommissionierzwecken aus dem Regal ausgelagert wurden. Die beiden Materialflüsse stören sich nicht gegenseitig, können aber an einem entfernten Ort miteinander fusioniert werden, ohne dass sich die Einlagerung und die Auslagerung wechselseitig stören.

Insbesondere koppelt der weitere Abschnitt der Fördertechnik im unteren Abschnitt des dynamischen Regals direkt an eine Bedienöffnung des dynamischen Regals.

In diesem Fall kann die Kommissionierperson die Artikel, die die Person aus dem Regal entnommen hat, direkt auf die Fördertechnik geben, um die kommissionierten Artikel abzutransportieren. Die Kommissionierperson muss sich nur minimal bewegen, um die Artikel beim Kommissionieren auszulagern.

Weiter ist es von Vorteil, wenn der Portalroboter zwei Greifeinheiten umfasst, wobei jede der Greifeinheiten an einen anderen beweglichen Querträger gekoppelt ist, so dass die Greifeinheiten unabhängig voneinander beweglich sind und zusammen einen der Regalböden austauschen können.

Da die Regalböden eine gewisse Länge aufweisen, um mehrere Ladungsträger gleichzeitig nebeneinander aufnehmen zu können, sind die Regalböden so lang, dass sie während eines Austauschs, vorzugsweise an ihren Stirnseiten, gegriffen werden müssen. Zu diesem Zweck werden zwei Greifeinheiten benötigt. Während eines Austauschs des Regalbodens agieren die Greifeinheiten gemeinsam, insbesondere synchron, um den Regalboden aus dem Regal auszuheben und an die Fördertechnik abzugeben bzw. von der Fördertechnik abzuheben und an das Regal abzugeben. In der restlichen Zeit können die Greifeinheiten aber unabhängig voneinander agieren, um z.B. einzelne Ladungsträger zwischen den Regalen und der Fördertechnik auszutauschen.

Vorzugsweise umfasst das System mehrere der dynamischen Regale, die in einer Längsrichtung und/oder einer Querrichtung der dynamischen Regale, vorzugsweise abstandslos, benachbart zueinander angeordnet sind, wobei der Portalroboter eingerichtet ist, die Lagereinrichtung, Artikel und/oder Ladungsträger zwischen allen dynamischen Regalen und der Fördertechnik auszutauschen. Ein oder mehrere der zusätzlichen dynamischen Regale können auch ohne jede Bedienöffnung ausgestattet sein und dienen in diesem Fall als reines Nachschublager für solche dynamische Regale, die Bedienöffnungen aufweisen.

Das System ist in diesem Fall dazu ausgelegt, mehrere der dynamischen Regale zu versorgen. Das System kann nicht nur ein einziges dynamisches Regal versorgen. Die Fördertechnik ist entsprechend dimensioniert und angeordnet, um jedes der dynamischen Regale mit den Artikeln zu versorgen. Vorzugsweise grenzt die Fördertechnik direkt, d.h. ohne Abstand, an jedes der Regale an, um die Wege für die Greifeinheit möglichst kurz zu halten. Kurze Wege verkürzen die Austauschzeit und erhöhen damit den Durchsatz (Anzahl von Einlagerungen/Auslagerungen pro Zeiteinheit).

Insbesondere umfasst die Fördertechnik ferner einen Abschnitt, der im oberen Abschnitt der dynamischen Regale angeordnet ist und der sich, vorzugsweise vollständig, entlang der Querrichtung der dynamischen Regale erstreckt, die in der Querrichtung benachbart zueinander angeordnet sind.

Da sich die Fördertechnik also nicht nur in der Längsrichtung benachbart zu den Regalen erstreckt, sondern auch in der Querrichtung, kann eine übergelagerte Steuerung die Greifeinheit auf einem kürzesten Weg zur Fördertechnik bewegen, wobei die Bewegung sowohl in der Längsrichtung als auch in der Querrichtung erfolgen kann.

Bei einer anderen besonderen Ausgestaltung ist die Greifeinheit entlang eines Masts in einer Vertikalrichtung des dynamischen Regals beweglich, um die Lagereinrichtungen, Artikel und/oder Ladungsträger in einer beliebigen Höhe aus dem dynamischen Regal sowie von der Fördertechnik zu greifen, wobei der Mast mittels eines Schlittens entlang eines beweglichen Querträgers beweglich ist.

Diese Maßnahme ermöglicht den oben bereits beschriebenen Zugriff auf Lagerniveaus, die tiefer als das oberste Lagerniveau liegen.

Jedes dynamische Regal weist ein umfänglich geschlossenes Gehäuse auf, welches nach oben offen ist oder oben, vorzugsweise automatisiert, geöffnet werden kann.

Das Gehäuse verhindert, dass gelagerte Artikel in den Bereich fallen können, wo die Kommissionierperson agiert. Die Artikel sind ordentlich aufgeräumt und nicht von außen sichtbar.

Vorzugsweise ist das dynamische Regal eingerichtet, die Lagereinrichtungen auf mindestens ein Kommissionierausgabeniveau des dynamischen Regals zu bewegen, das sich von dem höchst möglichen, d.h. dem obersten, Lagerniveau des dynamischen Regals unterscheidet, wobei die Kommissionierausgabeniveaus die einzigen Lagerniveaus sind, wo gelagerte Artikel zum Zwecke der gewöhnlichen Kommissionierung aus dem dynamischen Regal entnommen werden dürfen.

Dies bedeutet aber nicht, dass der Portalroboter auch nicht auch zum Kommissionieren eingesetzt werden darf. Der Portalroboter kann z.B. Vorkommissionieren oder eine Vorsortierung durchführen.

Beim Vorkommissionieren können z.B. sehr schwere Lagerbehälter oder sehr große und/oder schwere Artikel vom Portalroboter entnommen und an die Fördertechnik abgegeben und später zusammengeführt werden, während der Kommissionierer normal weiterkommissioniert.

Beim Vorsortieren können vom Portalroboter nachts zwischen verschiedenen Regalböden des gleichen Lagerlifts umgesetzt werden, um am Tag, wenn die normale Kommissionierung über die tiefer gelegene Bedienöffnung erfolgt, weniger Bewegungen innerhalb des dynamischen Regals durchführen zu müssen. Lagerbehälter, auf die gemäß dem gleichen Kommissionierauftrag zugegriffen werden muss, können während der Nacht mittels dem Protalroboter, der eine Kommissionierleistung hat, die für den üblichen Kommmissionierbetrieb während des Tags nicht ausreichend sein kann, auf den gleichen Regalboden umgesetzt werden.

Es versteht sich, dass derartige Vorkommissionierungen oder Vorsortierungen generell in Zeiten einer geringen Auslastung des dynamischen Regals vorgenommen werden können. Die Hauptfunktion des Portalroboters ist und bleibt aber die Versorgung des dynamischen Regals mit Nachschub, auch wenn der Portalroboter ausnahmsweise oder vorübergehend für kleinere Kommissionierarbeiten eingesetzt wird.

Des Weiteren wird die Aufgabe durch ein Verfahren gemäß Anspruch 14 gelöst.

Die Artikel werden zu Kommissionierzwecken gleichzeitig auf einem Kommissionierausgabeniveau des dynamischen Regals entnommen, das sich von dem oberen Lagerniveau unterscheidet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Ausführungsbeispiele sind in den Zeichnungen dargestellt und werden in der nachfolgenden Beschreibung näher erläutert. Es zeigen:
- Fig. 1: ein Blockdiagramm eines Systems zum Versorgen eines dynamischen Regals;
- Fig. 2: ein Blockdiagramm eines dynamischen Regals;
- Fig. 3: eine Seitenansicht eines schematisch dargestellten Paternoster-Regals;
- Fig. 4: eine Seitenansicht eines schematisch dargestellten Lagerlifts;
- Fig. 5: ein Blockdiagramm eines Portalroboters;
- Fig. 6: eine Draufsicht auf ein System mit mehreren dynamischen Regalen;
- Fig. 7: eine Seitenansicht des Systems der Fig. 6; und
- Fig. 8: einen herkömmlichen Portalroboter.

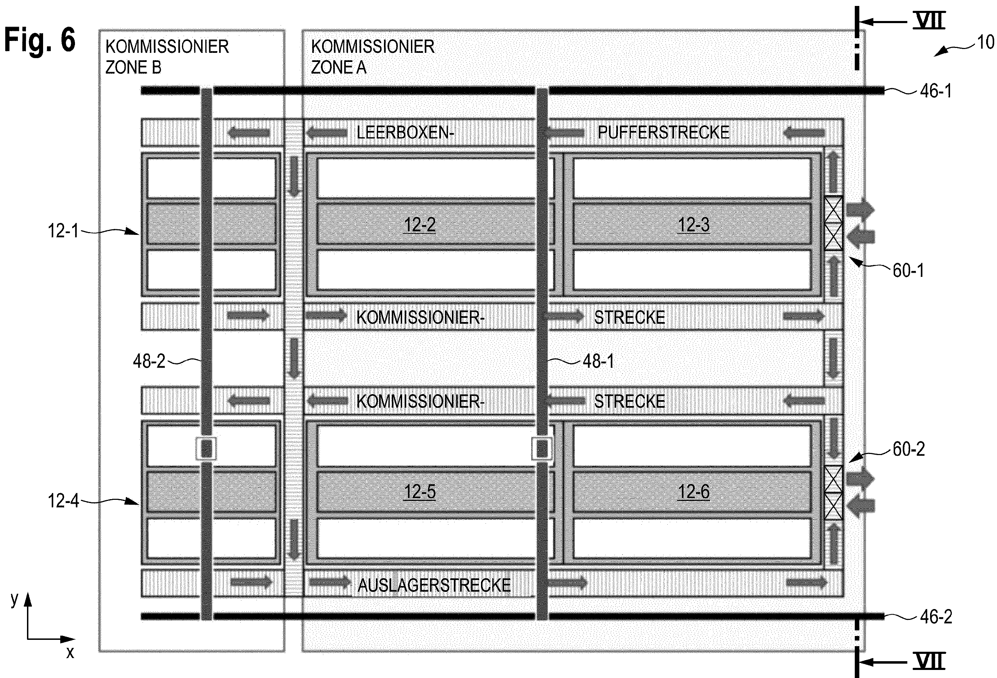

Fig. 1 zeigt ein Blockdiagramm eines Systems 10, das zur Versorgung eines dynamischen Regals 12 mit Artikeln 13 eingerichtet ist. Im Allgemeinen weist das System 10 mindestens ein dynamisches Regal 12, mindestens einen Portalroboter 14 (vergleiche auch Fig. 8) und eine Fördertechnik 16 auf. Die Fig. 6 (Draufsicht) und 7 (Seitenansicht) zeigen ein exemplarisches System 10, das z.B. sechs Regale 12, einen Portalroboter 14 mit zwei Greifeinheiten 44 und eine Fördertechnik 16 aufweist. Es versteht sich, dass das System 10 auch nur mit einem einzigen Regal 12 betrieben werden kann.

Unter der "Fördertechnik" 16 sind technische Einrichtungen zu verstehen, mit denen Güter in beliebiger Richtung und über begrenzte Entfernungen bewegt werden. Die Fördertechnik 16 umfasst insbesondere Stetigförderer, wie z.B. Rollenförderer, Bandförderer, Kettenförderer, Hängeförderer und ähnliche Förderer, die stetig (immer) an einem Ort vorhanden sind. Die Fördertechnik 16 kann auch in Form eines fahrerlosen Transportsystems realisiert sein. In den nachfolgenden Figuren ist die Fördertechnik 16 vereinfachend in Form von Rollenförderern gezeigt, was aber nicht einschränkend zu verstehen ist.

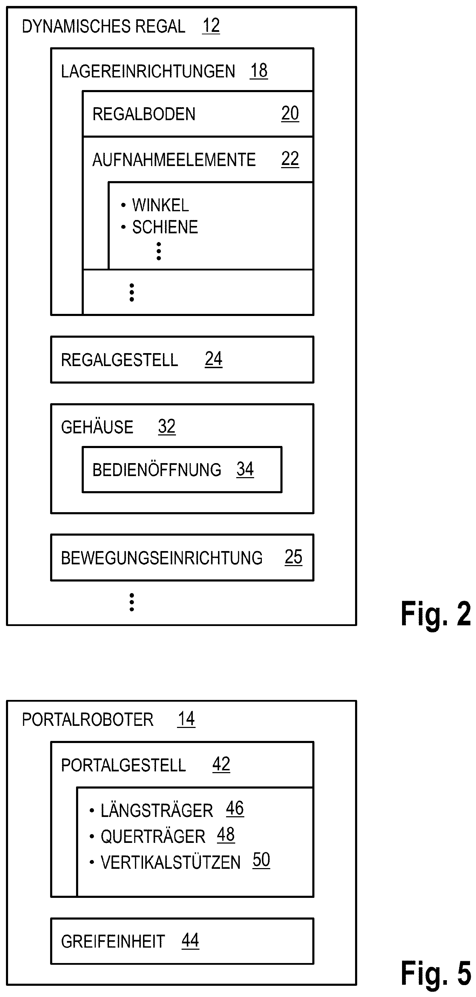

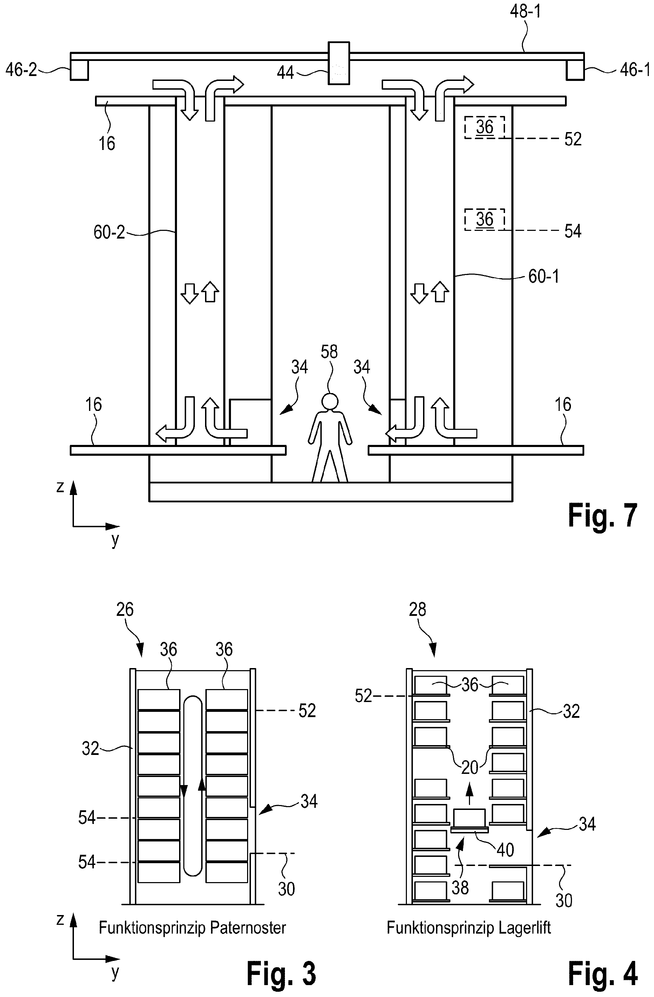

Wie oben bereits erläutert, ist unter einem "dynamischen Regal" 12 ein regalartiges Lager- und Kommissioniersystem zu verstehen, bei dem Lagereinrichtungen 18, vgl. Fig. 2, wie z.B. Regalböden 20 oder Aufnahmeelemente 22 (wie z.B. Winkel, Schienen oder dergleichen) innerhalb des Regals 12 bewegt werden, um eingelagerte Artikel 13 nach dem "Ware-zur-Person"-Prinzip bei einer Bedienöffnung 34, vgl. Fig. 3 und 4, auf einem Kommissionierausgabeniveau 30 bereitzustellen. Die Lagereinrichtungen 18 definieren bewegliche, d.h. dynamische, Lagerplätze im eingangs genannten Sinne.

Wie in Fig. 2 veranschaulicht, umfasst das dynamische Regal 12 im Allgemeinen neben den Lagereinrichtungen 18 ein stationäres, d.h. unbewegliches starres, Regalgestell 24 und eine Bewegungseinrichtung 25 (Zugmittel, Antriebe, Führungen, etc.) zum Bewegen der Lagereinrichtungen 18, d.h. der gelagerten Artikeln 13, - und somit der Lagerplätze - innerhalb des dynamischen Regals 12. Nach außen sind die dynamischen Regale 12 aber als abgeschlossene Einheiten zu betrachten. Die Artikel 13 verlassen das Regal 12 nicht, um zu einem entfernt angeordneten Kommissionierplatz transportiert zu werden. Der Kommissionierplatz ist in diesem Sinne in das Regal 12 integriert, wie es unter Bezug auf Fig. 3 noch näher erläutert werden wird.

In den Fig. 3 und 4 sind zwei exemplarische Typen eines dynamischen Regals 12 schematischt veranschaulicht, nämlich ein Paternoster-Regal 26 und ein Lagerlift 28. Die Artikel 13 werden innerhalb des Regals 12 zur Bedienöffnung 34 bewegt. Die Bedienöffnung 34 befindet sich auf einem Kommissionierausgabeniveau 30, das sich von einem obersten Lagerniveau 52 unterscheidet. Die Bedienöffnung 34 definiert einen regalintegrierten Kommissionierplatz, der üblicherweise in einem unteren Abschnitt des Regals 12 auf einem Bodenniveau angeordnet ist. Es versteht sich, dass der Kommissionierplatz auch in einem mittleren und/oder oberen Bereich des Regals 12 angeordnet werden kann, indem z.B. eine (nicht dargestellte Plattform) für den (nicht dargestellten) Kommissionierer 58 vorgesehen wird, der exemplarisch in Fig. 7 gezeigt ist.

Die Fig. 3 zeigt eine schematische Seitenansichten des Paternoster-Regals 26 und Fig. 4 zeigt eine schematische Seitenansicht des Lagerlifts 28 (rechts). Die Fig. 3 und 4 veranschaulichen ferner deren Funktionsprinzipien. Das Paternosterregal 26 und der Lagerlift 28 können in der Höhenrichtung Z gleich hoch ausgebildet sein und jeweils durch ein (optionales) Gehäuse 32 von der Außenwelt getrennt sein. Herkömmliche Paternoster-Regale 26 und Lagerlifte 28 werden üblicherweise vollständig vom Gehäuse 32 umschlossen, wenn man von der Bedienöffnung 34 absieht. In der vorliegenden Offenbarung sind die Regale 12 aber immer oben offen ausgebildet. Dies bedeutet, dass eine Oberseite der Regale 12 von oben frei zugänglich ist. Das Gehäuse 32 weist in diesem Fall keine Oberseite und keinen Deckel auf. Alternativ oder ergänzend können zum Schutz vor Verschmutzungen bewegliche Abdeckungen (nicht gezeigt), z.B. Rollläden oder Ähnliches, vorgesehen werden, die vorzugsweise automatisiert bewegt werden.

Das Gehäuse 32 weist aber mindestens die eine Bedienöffnung 34 auf, wo von außen auf die gelagerten Artikel 13 zugegriffen werden kann. Der Zugriff erfolgt auf Höhe des Kommissionierausgabeniveaus 30, indem gewünschte Artikel 13 dort automatisch durch eine entsprechende Bewegung des oder Lagerplätze bereitgestellt werden. Die Artikel 13 können direkt auf den Lagereinrichtungen 18 (z.B. auf den Regalböden 20) oder indirekt mittels Ladungsträgern (z.B. in Lagerkisten, -boxen, -kartons, -schalen, -tablaren oder - behältern 26) auf den Regalböden 20 gelagert sein. Nachfolgend wird vereinfachend davon ausgegangen, dass die Artikel 13 in Lagerbehältern 36 gelagert werden, die wiederum auf Regalböden 20 gelagert werden.

Im Paternoster-Regal 26 der Fig. 3 laufen die Lagerbehälter 36, in denen die Artikel 13 gelagert sind und die auf den Regalböden stehen, zum Beispiel gegen den Uhrzeigersinn um. Die Regalböden 20 werden von (nicht dargestellten) winkelförmigen Aufnahmeelementen 22 (Lagereinrichtungen 18 des Regals 26) gehalten. Die winkelförmigen Aufnahmeelemente 22 sind im Paternoster-Regal 26 der Fig. 3 fest mit einem vertikal endlos umlaufenden Zugmittel verbunden und ermöglichen einen (manuellen) Zugriff auf die Lagerbehälter 36 sowie einen Austausch der Lagerbehälter 36 am Ort der Bedienöffnung 34. Um auf einen anderen Lagerbehälter 36 zugreifen zu können, werden im Paternoster-Regal 26 alle Lagerbehälter 36 gleichzeitig bewegt, bis sich der gewünschte Lagerbehälter 36 auf dem Kommissionierausgabeniveau 30 bei der Bedienöffnung 34 befindet, damit ein (nicht dargestellter) Kommissionierer auf die Artikel 13 in dem gewünschten Lagerbehälter 36 zugreifen kann. Es versteht sich, dass die Regalböden 20 im Paternoster-Regal 26 auch weggelassen werden können, so dass die Lagerbehälter 36 direkt von den Aufnahmeelementen 2 (austauschbar) gehalten werden.

Der in der Fig. 4 dargestellte Lagerlift 28 unterscheidet sich vom Paternoster-Regal 26 der Fig. 3 im Wesentlichen darin, dass im Falle eines Zugriffs nicht alle Artikel 13 des Regals 12 (gleichzeitig) bewegt werden. Im Lagerlift 28 der Fig. 4 sind die Lagereinrichtungen 18 (vergleiche Fig. 2) durch die individuell versetzbaren Regalböden 20 ausgebildet, die mittels eines zentral angeordneten Vertikalförderers 38 innerhalb des Lagerlifts 28 einzeln umgesetzt werden. Der Vertikalförderer 38 weist ein Lastaufnahmemittel 40 auf, das im Wesentlichen in der Vertikalrichtung Z beweglich ist und das eingerichtet ist, die Regalböden 20 in einer horizontalen Richtung Y in das seitlich zum Vertikalförderer 38 angeordnete (stationäre) Regalgestell 24 einzulagern und von dort auszulagern. Alternativ zum Vertikalförderer 38 können auch Hubbalken (nicht dargestellt) eingesetzt werden, die ein Lastaufnahmemittel aufweisen, das vertikal entlang von Masten (nicht dargestellt) und horizontal in der X-Richtung mittels eines Schlittens (nicht dargestellt) entlang einem Längsbalken (nicht dargestellt) beweglich ist, um mehrere Regalboden-Reihen abzufahren, die in der Längsrichtung X nebeneinander angeordnet sind.

In der Fig. 4 transportiert das Lastaufnahmemittel 40 einen Regalboden 20, der mit einem oder mehreren Lagerbehältern 36 bestückt ist, von seinem Lagerplatz aus einer linken Lagerzeile zur Bedienöffnung 34 im Bereich einer rechten Lagerzeile, so dass der ursprüngliche Lagerplatz in der linken Zeile frei ist. Die Lagerplätze sind im Lagerlift 28 in Zeilen vertikal übereinander angeordnet. Es versteht sich, dass der Lagerlift 28 auch nur mit einer einzigen Zeile (links oder rechts) von Lagerplätzen betrieben werden kann.

Die generelle Funktionsweise von Lagerliften 28 ist in dem "Whitepaper 2/2019" mit dem Titel "LAGERLIFTE - Funktionsweise-Varianten-Einsatz" beschrieben, dass von der Homepage der Anmelderin (www.ssi-schaefer.com) abgerufen werden kann. In diesem Dokument wird die unterschiedliche Funktionsweise der Paternoster-Regale 26 und der Lagerlifte 28 noch näher erläutert. Auch werden die Vorteile von dynamischen Regalen 12 allgemein und die Vorteile von Lagerliften 28 im Speziellen beschrieben.

Fig. 5 zeigt ein Blockdiagramm des Portalroboters 14.

Der Portalroboter 14 der Fig. 5 weist allgemein ein, vorzugsweise stationär angeordnetes, Portalgestell 42 und mindestens eine Greifeinheit 44 auf. Die Greifeinheit 44 ist beweglich an das Portalgestell 42 gekoppelt. Die Greifeinheit 44 ist entlang von mindestens zwei Achsen beweglich, wie es nachfolgend noch näher erläutert werden wird. Das Portalgestell 42 überragt das dynamische Regal 12 vertikal (vgl. Fig. 7), so dass die Lagereinrichtungen 18, die Artikel 13 und/oder Ladungsträger, wie z.B. die Lagerbehälter 36, mittels der Greifeinheit 44 von oben aufgenommen und abgegeben werden können.

Das Portalgestell 42 der Fig. 5 umfasst Längsträger 46, Querträger 48 und (optionale) Vertikalstützen 50. Nicht dargestellt sind die eingangs bereits erwähnten Antriebe, Schlitten, etc.

In der Draufsicht der Fig. 6 ist ein System 10 mit einem Portalgestell 42 gezeigt, das zwei Längsträger 46-1 und 46-2 und zwei Querträger 48-1 und 48-2 umfasst. Das Portalgestell 42 kann mit seinem Längsträgern 46-1 und 46-2 direkt an Hallenwänden (nicht dargestellt) abgestützt sein, so dass keine Vertikalstützen 50 benötigt werden. Die (beweglichen) Querträger 48-1 und 48-2 sind in der Längsrichtung X verschieblich auf den Längsträgern 46 gelagert und jeweils mit einer der Greifeinheiten 44-1 und 44-2 verbunden. Die Querträger 48-1 und 48-2 können unabhängig voneinander bewegt werden.

Die Längsträger 46-1 und 46-2 sind in der Querrichtung Y außerhalb der sechs dynamischen Regale 12-1 bis 12-6 angeordnet.

In der Fig. 7, die eine Seitenansicht der Fig. 6 in Richtung der Pfeile VII zeigt, ist veranschaulicht, dass das Portalgestell 42 die dynamischen Regale 12 in der Höhenrichtung Z überragt, so dass die Greifeinheit 44 von oben mit den dynamischen Regalen 12 interagieren kann. Die Greifeinheit 44 ist in der Querrichtung Y mittels eines nicht näher bezeichneten und gezeigten Schlittens beweglich am Querträger 48 gelagert. Die Greifeinheit 44 ist mit einer nicht näher gezeigten und bezeichneten Hubeinrichtung ausgestattet, um mit einem minimalen Hub auf ein oberstes Lagerniveau 52, vgl. Fig. 3 und 4, zugreifen zu können.

Es versteht sich, dass die Greifeinheit 44 auch mit einem größeren Hub ausgestattet sein kann. In diesem Fall umfasst der Portalroboter 14 vorzugsweise einen (nicht dargestellten) Mast, der sich in der Höhenrichtung Z erstreckt und beweglich ist sowie an den Querträger 48 gekoppelt ist. In diesem Fall kann die Greifeinheit 44 auch auf andere Lagerniveaus 54 zugreifen, die tiefer als das höchst mögliche(oberste) Lagerniveau 52 angeordnet sind, wobei vorausgesetzt wird, dass die Lagerplätze darüber nicht belegt sind. Diese Variante des Zugriffs ist nur im Lagerlift 28 der Fig. 4 möglich.

Mit der Greifeinheit 44 können generell einzelne oder mehrere der Artikel 13 direkt gegriffen werden. Mit der Greifeinheit 44 können aber auch ein oder mehrere Lagerbehälter 36 gegriffen werden. Mit der Greifeinheit 44 können ganze Regalböden 20 gegriffen werden, wobei in diesem Fall vorzugsweise zwei Greifeinheiten 44 eingesetzt werden, die an unterschiedlichen Querträgern 48 befestigt sind, wie es in der Fig. 6 angedeutet ist. Die Greifeinrichtung 44 ist entsprechend eingerichtet, die unterschiedlichen Objekte greifen zu können. Die Greifeinrichtung 44 kann auch mit austauschbaren Greifer ausgerüstet sein.

Die Fig. 6 zeigt ferner, dass die Fördertechnik 16 außen (umfänglich) um die dynamischen Regale 12 herum angeordnet ist. In der Fig. 6 umschließt die Fördertechnik 16 exemplarisch eine Kombination der Regale 12-2 und 12-3 sowie eine Kombination der Regale 12-5 und 12-6 jeweils vollständig. Die Regale 12-2 und 12-3 stehen direkt benachbart zueinander. Die Regale 12-5 und 12-6 stehen direkt benachbart zueinander. Die (Einzel-)Regale 12-1 und 12-4 sind nur teilweise umschlossen.

Es versteht sich, dass ein Verlauf der Fördertechnik 16 beliebig gewählt werden kann. Auch ein horizontaler Abstand zwischen der Fördertechnik 16 und den Regalen 12 kann beliebig gewählt werden. Bevorzugt ist aber eine abstandlose Anordnung, weil sich die Bewegungswege der Greifeinheiten 44 zwischen der Fördertechnik 16 und den Regalen 12 verkürzen, was in einer Durchsatzoptimierung (Anzahl von ausgetauschten Artikeln pro Zeiteinheit) resultiert. Deshalb ist es auch sinnvoll Abschnitte der Fördertechnik in der Längsrichtung X und in der Querrichtung Y vorzusehen.

Die Anordnung der Fördertechnik 16 im oberen Bereich der Regale 12 verringert den Hub, um die Artikel 13 von der Fördertechnik 16 aufzunehmen oder die Artikel 13 an die Fördertechnik 16 abzugeben. Auf einen Mast kann verzichtet werden. Der Lagerraum wird optimal durch die Regale 12 ausgenutzt.

Die Fördertechnik 16 der Fig. 6 weist Abschnitte auf, die sich in der Längsrichtung X vollständig entlang der Regale 12 erstrecken. Die Fördertechnik 16 umfasst ferner Abschnitte, die sich in der Querrichtung Y vollständig entlang der Regale 12 erstrecken. Diese Abschnitte könnten auch kürzer gewählt werden. Vorzugsweise erstrecken sich diese Abschnitte der Fördertechnik 16 aber über die Gesamtlänge der Regale 12 sowie über die Gesamtbreite der Regale 12, was es der Greifeinheit 44 ermöglicht, wegoptimiert durch eine Steuerung 56 (vgl. Fig. 1) bewegt zu werden. In diesem Fall muss die Greifeinheit 44 immer nur in einer Richtung (X oder Y) bewegt werden, um einen Artikel 13 mit der Fördertechnik 16 auszutauschen.

Der Austausch erfolgt unabhängig von Kommissioniervorgängen, die gleichzeitig über die Bedienöffnungen 34 durchgeführt werden können.

In der Fig. 7 erfolgt die Kommissionierung exemplarisch manuell durch den Kommissionierer 58, der auch durch einen Roboter (nicht dargestellt) ersetzt werden könnte. Der Kommissionierer 58 bewegt sich auf dem Boden des Systems 10. Die Bedienöffnungen 34 sind in einem unteren Bereich der Regale 12 angeordnet, so dass der Kommissionierer 58 dort Artikel 13 entnehmen kann.

Neben den Abschnitten der Fördertechnik 16, die im oberen Bereich der Regale 12 angeordnet sind, kann die Fördertechnik 16 ferner weitere Vertikalförderer 60 umfassen, die außerhalb der Regale 12 angeordnet sind, um Güter zwischen verschiedenen Niveaus der Fördertechnik 16 in der Höhenrichtung Z zu transportieren.

Das System 10 der Fig. 6 umfasst exemplarisch zwei externe Vertikalförderer 60-1 und 60-2, die vorzugsweise direkt angrenzend an die Regale 12-3 und 12-6 angeordnet sind. Die weiteren Vertikalförderer 60 verbinden ein oberes Niveau der Fördertechnik 16 mit einem unteren Niveau der Fördertechnik, wie es in Fig. 7 veranschaulicht ist.

Es versteht sich, dass die Fördertechnik 16 grundsätzlich auf einem beliebigen Höhenniveau angeordnet werden kann. Die Fördertechnik 16 umfasst aber Abschnitte, die im oberen Bereich der Regale 12 angeordnet sind, um zusätzliche Hubbewegungen der Greifeinheit 44 beim Austauschen von Artikeln 13 zwischen den Regalen 12 und der Fördertechnik zu vermeiden.

Es versteht sich, dass das System 10 auch nur ein einziges dynamisches Regal 12 umfassen kann, das über die Fördertechnik 16 mit den Artikeln 13 versorgt wird.

Ferner versteht es sich, dass das in der Fig. 6 gezeigte Flächenportal durch andere Portalformen ersetzt werden kann. So sind z.B. auch Linearportale möglich, die aus zwei Vertikalstützen 50 bestehen, die über einen Querträger 48 miteinander verbunden sind, entlang dem die Greifeinheit 44 in der Querrichtung Y beweglich gelagert ist. Diese Vertikalstützen 50 können in der Längsrichtung X angetrieben werden, um das entsprechende Portalgestell auch in der Längsrichtung X versetzen zu können. Auf diese Weise kann die Greifeinheit 44 jeden Punkt auf der Oberseite der Regale 12 erreichen.

Über die Fördertechnik 16 können die Artikel 13 direkt, oder indirekt mittels Ladungsträgern oder Regalböden 20, zu einem gewünschten Regal 12 transportiert werden. Die Greifeinheit 44 wird horizontal über die Artikel 13 auf der Fördertechnik 16 bewegt und anschließend vertikal abgesenkt, um die Artikel 13 zu greifen. Danach hebt die Greifeinheit die Artikel 13 vertikal an und wird horizontal über das gewünschte Regal bewegt, wobei die vertikalen und horizontalen Bewegungen zumindest teilweise auch gleichzeitig erfolgen können. Dann wird der Artikel 13 mittels der Greifeinheit 44 zumindest auf das oberste Lagerniveau 52 abgesenkt, um den Artikel 13 an eine gewünschte (leere) Lagereinrichtung 18 abzugeben, die zuvor vom Regal 12 automatisch auf das oberste freie Lagerniveau bewegt wurde. Danach ist die Einlagerung des Artikels 13 abgeschlossen.

Es versteht sich, dass eine Auslagerung in einer umgekehrten Reihenfolge abläuft, wobei insbesondere leere Ladungsträger und/oder Regalböden von den Regalen 12 zur Fördertechnik 16 mittels dem Portalroboter 14 bewegt werden.

Auch können auf diese Weise Artikel 13 zwischen den Regalen 12 ausgetauscht werden.

### Bezugszeichenliste

- 10: System
- 12: (Dynamisches) Regal
- 13: Artikel
- 14: Portalroboter
- 16: Fördertechnik
- 18: Lagereinrichtung
- 20: Regalboden
- 22: Aufnahmeelement
- 24: Regalgestell
- 25: Bewegungseinrichtung
- 26: Paternoster-Regal
- 28: Lagerlift
- 30: Kommissionierausgabeniveau
- 32: Gehäuse von 12
- 34: Bedienöffnung
- 36: Lagerbehälter
- 38: Vertikalförderer
- 40: Lastaufnahmemittel
- 42: Portalgestell
- 44: Greifeinheit
- 46: Längsträger
- 48: Querträger
- 50: Vertikalstützen
- 52: Höchst mögliches Lagerniveau
- 54: Allgemeines Lagerniveau
- 56: Steuerung
- 58: Kommissionierer
- 60: weitere Vertikalförderer

## Patentansprüche

1. System (10) zum Versorgen eines dynamischen Regals (12) mit Artikeln (13), wobei das System (10) aufweist:
das dynamische Regal (12), das ein Paternoster-Regal (26) oder ein Lagerlift (28) ist und das zum Lagern und Kommissionieren der Artikel (13) eingerichtet ist, wobei das dynamische Regal (12) ein stationäres Regalgestell (24) und eine Vielzahl von vertikal beweglichen Lagereinrichtungen (18; 20, 22) umfasst, so dass die Lagereinrichtungen (18) in einer veränderbaren Anordnung vertikal übereinander angeordnet sind, wobei jede der Lagereinrichtungen (18) angepasst ist, einen oder mehrere der Artikel (13) direkt aufzunehmen oder indirekt in einem oder mehreren Ladungsträgern (36) aufzunehmen;
einen Portalroboter (14) zum Transport der Lagereinrichtungen (20), Artikel (13) und/oder Ladungsträger (36) aus dem dynamischen Regal (12) und in das dynamische Regal (12), wobei der Portalroboter (14) ein Portalgestell (42) und eine Greifeinheit (44) umfasst, wobei die Greifeinheit (44) an das Portalgestell (42) gekoppelt ist und entlang von mindestens zwei Achsen (X, Y, Z) beweglich ist; und
eine Fördertechnik (16) zur Versorgung der Greifeinheit (44) des Portalroboters (14) mit den Lagereinrichtungen (20), Artikeln (13) und/oder Ladungsträgern (36), **dadurch gekennzeichnet, dass** die Fördertechnik (16) Abschnitte in einem oberen Bereich des dynamischen Regals (12) aufweist, die
eingerichtet sind, das dynamische Regal von oben mit neuen Artikeln zu versorgen, und
sich entlang einer Längsrichtung (X) und einer Querrichtung (Y) des dynamischen Regals (12) benachbart zum dynamischen Regal (12) erstrecken, so dass die Greifeinheit (44) die Lagereinrichtungen (20), Artikel (13) und/oder Ladungsträger (36) im Wesentlichen ohne Hub mit den Abschnitten der Fördertechnik (16) austauschen kann;
wobei das Portalgestell (42) das dynamische Regal (12) vertikal überragt, so dass die Lagereinrichtungen (20), Artikel (13) und/oder Ladungsträger (36) von oben mittels der Greifeinheit (44) zwischen dem dynamischen Regal (12) und der Fördertechnik (16) austauschbar sind.

2. System (10) nach Anspruch 1, wobei der Portalroboter (14) eingerichtet ist, solche der Lagereinrichtungen (20), Artikel (13) und/oder Ladungsträger (36) auszutauschen, die auf einem höchsten belegten Lagerniveau (54) im dynamischen Regal (12) positioniert sind, wobei das höchste belegte Lagerniveau (54) im dynamischen Regal (12) befüllungsabhängig ist.

3. System (10) nach Anspruch 2, wobei das höchste belegte Lagerniveau (54) im dynamischen Regal (12) ein höchst mögliches Lagerniveau (52) des dynamischen Regals (12) ist, wobei das höchst mögliche Lagerniveau (52) befüllungsunabhängig ist.

4. System (10) nach einem der Ansprüche 1 bis 3, wobei das dynamische Regal (12) ein Lagerlift (28) ist, der innen einen Vertikalförderer (38) mit einem vertikal beweglichen Lastaufnahmemittel (40) umfasst,
wobei die beweglichen Lagereinrichtungen (18), insbesondere tablarartige, Regalböden (20) sind,
wobei das Regalgestell (24) ferner unbewegliche Aufnahmeelemente (22) zum Halten der Regalböden (20) umfasst,
wobei der Vertikalförderer (38) stationär, vorzugsweise mittig, relativ zum Regalgestell (24) angeordnet ist, so dass das Lastaufnahmemittel (40) die Regalböden (20) zum Einlagern horizontal in die Aufnahmeelemente (22) bewegen und zum Auslagern horizontal aus den Aufnahmeelementen (22) bewegen kann und so dass das Lastaufnahmemittel (40) die Regalböden (20) vertikal auf ein höchst mögliches Lagerniveau (52) des dynamischen Regals (12) bewegen kann.

5. System (10) nach einem der Ansprüche 1 bis 4, wobei das Portalgestell (42) Längsträger (46) umfasst, die vorzugsweise von mindestens vier stationären Vertikalstützen (50) getragen werden, wobei ein Querträger (48) von den Längsträgern (46) in der Längsrichtung (X) des dynamischen Regals (12) beweglich getragen wird.

6. System (10) nach Anspruch 5, wobei die Fördertechnik (16) ferner einen Vertikalförderer (60) umfasst, der die Abschnitte der Fördertechnik (16) im oberen Abschnitt des dynamischen Regals (12) mit einem weiteren Abschnitt der Fördertechnik (16) in einem unteren Bereich des dynamischen Regals (16) verbindet.

7. System (10) nach Anspruch 6, wobei der weitere Abschnitt der Fördertechnik (16) im unteren Bereich des dynamischen Regals (16) direkt an eine Bedienöffnung (34) des dynamischen Regals (16) koppelt.

8. System (10) nach einem der Ansprüche 1 bis 7, wobei der Portalroboter (14) zwei Greifeinheiten (44) umfasst, wobei jede der Greifeinheiten (44) an einen anderen beweglichen Querträger (48) gekoppelt ist, so dass die Greifeinheiten (44) unabhängig voneinander beweglich sind und einen der Regalböden (20) austauschen können.

9. System (10) nach einem der Ansprüche 1 bis 8, das mehrere der dynamischen Regale (12) umfasst, die in einer Längsrichtung (X) und/oder einer Querrichtung (Y) der dynamischen Regale (12), vorzugsweise abstandlos, benachbart zueinander angeordnet sind,
wobei der Portalroboter (14) eingerichtet ist, die Lagereinrichtungen (20), Artikel (13) und/oder Ladungsträger (36) zwischen allen dynamischen Regalen (12) und der Fördertechnik (16) oder unter den dynamischen Regalen (12) auszutauschen.

10. System (10) nach Anspruch 9, wobei die Fördertechnik (16) ferner einen Abschnitt umfasst, der im oberen Abschnitt der dynamischen Regale (12) angeordnet ist und der sich, vorzugsweise vollständig, entlang der Querrichtung (Y) der dynamischen Regale (12) erstreckt, die in der Querrichtung (Y) benachbart zueinander angeordnet sind.

11. System (10) nach einem der Ansprüche 1 bis 10, wobei die Greifeinheit (44) entlang eines Masts in einer Vertikalrichtung (Z) des dynamischen Regals (12) beweglich ist, um die Lagereinrichtungen (20), Artikel (13) und/oder Ladungsträger (36) in einer beliebigen Höhe aus dem dynamischen Regal (12) sowie von der Fördertechnik (16) zu greifen, wobei der Mast mittels eines Schlittens entlang eines beweglichen Querträgers (48) des Portalgestells beweglich ist.

12. System (10) nach einem der Ansprüche 1 bis 11, wobei jedes dynamische Regal (12) ein umfänglich geschlossenes Gehäuse (32) aufweist, welches nach oben offen oder öffenbar ist.

13. System (10) nach einem der Ansprüche 1 bis 12, wobei das dynamische Regal eingerichtet ist, die Lagereinrichtungen (20) auf mindestens ein Kommissionierausgabeniveau (30) des dynamischen Regals (12) zu bewegen, das sich von einem höchst möglichen Lagerniveau (50) des dynamischen Regals (12) unterscheidet, wobei die Kommissionierausgabeniveaus (30) die einzige Lagerniveaus sind, wo gelagerte Artikel (13) zum Zwecke einer gewöhnlichen Kommissionierung aus dem dynamische Regal (12) entnommen werden dürfen.

14. Verfahren zum Bewegen von Artikeln (13) von einer Fördertechnik (16) in ein dynamisches Regal (12) mittels eines Portalroboters (14), wobei das dynamische Regal (12) ein stationäres Regalgestell (24) und eine Vielzahl von vertikal beweglichen Lagereinrichtungen (18; 20, 22) umfasst, so dass die Lagereinrichtungen (18) in einer veränderbaren Anordnung vertikal übereinander angeordnet sind, wobei jede der Lagereinrichtungen (18) angepasst ist, einen oder mehrere der Artikel (13) direkt oder indirekt in einem oder mehreren Ladungsträgern (36) aufzunehmen; wobei der Portalroboter (14) ein Portalgestell (42) und eine Greifeinheit (44) umfasst, wobei die Greifeinheit (44) an das Portalgestell (42) gekoppelt ist und entlang von mindestens zwei Achsen (XYZ) beweglich ist und wobei das Portalgestell (42) jedes der dynamischen Regale (12) vertikal überragt, mit den Schritten:
Bewegen eines gewünschten Artikels (13) mittels der Fördertechnik (16) zum dynamischen Regal (12);
Bewegen der Greifeinheit (44) über den gewünschten Artikel (13) und direktes oder indirektes Aufnehmen des gewünschten Artikels (12) mittels der Greifeinheit (44); und
Bewegen der Greifeinheit (44) mit dem gewünschten Artikel (13) über das dynamische Regal (12) und Abgeben des gewünschten Artikels (13) an das dynamische Regal (12), wenn der gewünschte Artikel (13) von der Fördertechnik (16) aufgenommen wurde;
wobei gleichzeitig Artikel (13) zu Kommissionierzwecken auf einem Kommissionierausgabeniveau (30) des dynamischen Regals (12) entnommen werden, das sich von dem oberen Lagerniveau (52, 54) unterscheidet, und wobei die Fördertechnik (16) die Greifeinheit (44) des Portalroboters (14) mit den Lagereinrichtungen (20), Artikeln (13) und/oder Ladungsträgern (36) versorgt, wobei die Fördertechnik (16) Abschnitte in einem oberen Bereich des dynamischen Regals (12) aufweist, die das dynamische Regal von oben mit neuen Artikeln versorgen und die sich entlang einer Längsrichtung (X) und einer Querrichtung (Y) des dynamischen Regals (12) benachbart zum dynamischen Regal (12) erstrecken, so dass die Greifeinheit (44) die Lagereinrichtungen (20), Artikel (13) und/oder Ladungsträger (36) im Wesentlichen ohne Hub mit den Abschnitten der Fördertechnik (16) austauscht.

## Claims

1. A system (10) for supplying a dynamic rack (12) with articles (13), wherein the system (10) comprises:
the dynamic rack (12), which is a Paternoster rack (26), or a storage lift (28), and is configured to store and pick the articles (13), wherein the dynamic rack (12) includes a stationary rack frame (24) and a plurality of vertically movable storage devices (18; 20, 22) so that the storage devices (18) are arranged vertically on top of each other in an adaptable arrangement, wherein each of the storage devices (18) is adapted to receive one or more of the articles (13) directly, or indirectly in one or more load carriers (36);
a gantry robot (14) for transporting the storage devices (20), articles (13) and/or load carriers (36) from the dynamic rack (12) and to the dynamic rack (12), wherein the gantry robot (14) includes a gantry frame (42) and a picking unit (44), wherein the picking unit (44) is coupled to the gantry frame (42) and is movable along at least two axes (X, Y, Z); and
a conveyor system (16) for supplying the picking unit (44) of the gantry robot (14) with the storage devices (20), articles (13) and/or load carriers (36), **characterized in that**
the conveyor system (16) comprises portions in an upper section of the dynamic rack (12), which
are configured to supply the dynamic rack from above with new articles, and
extend along a longitudinal direction (X) and a transverse direction (Y) of the dynamic rack (12) adjacent to the dynamic rack (12) such that the picking unit (44) can exchange the storage devices (20), articles (13) and/or load carriers (36) with the portions of the conveyor system (16) substantially without lifting;
wherein the gantry frame (42) extends vertically beyond the dynamic rack (12) so that the storage devices (20), articles (13) and/or load carriers (36) are from above exchangeable, by means of the picking unit (44), between the dynamic rack (12) and the conveyor system (16).

2. The system (10) of claim 1, wherein the gantry robot (14) is configured to exchange such ones of the storage devices (20), articles (13) and/or load carriers (36), which are positioned on a highest occupied storage level (54) in the dynamic rack (12), wherein the highest occupied storage level (54) in the dynamic rack (12) is dependent on a filling degree.

3. The system (10) of claim 2, wherein the highest occupied storage level (54) in the dynamic rack (12) is the highest possible storage level (52) of the dynamic rack (12), wherein the highest possible storage level (52) is independent of the filling degree.

4. The system (10) of any one of claims 1 to 3, wherein the dynamic rack (12) is a storage lift (28) including internally a vertical conveyor (38) having a vertically movable load-handling device (40),
wherein the movable storage devices (18) are, in particular tray-like, shelves (20),
wherein the rack frame (24) further includes immovable receiving elements (22) for supporting the shelves (20),
wherein the vertical conveyor (38) is arranged stationary, preferably centrally, relative to the rack frame (24) so that the load-handling device (40) can move the shelves (20), for horizontal storage, into the receiving elements (22) and move the same, for horizontal retrieval, from the receiving elements (22), and so that the load-handling device (40) can move the shelves (20) vertically onto a highest possible storage level (52) of the dynamic rack (12).

5. The system (10) of any one of claims 1 to 4, wherein the gantry frame (42) comprises longitudinal beams (46), which are preferably supported by at least four stationary vertical supports (50), wherein a crossbeam (48) is movably supported by the longitudinal beams (46) in the longitudinal direction (X) of the dynamic rack (12).

6. The system (10) of claim 5, wherein the conveyor system (16) further includes a vertical conveyor (60) connecting the portions of the conveyor system (16) in an upper section of the dynamic rack (12) to a further portion of the conveyor system (16) in a lower region of the dynamic rack (16).

7. The system (10) of claim 6, wherein the further portion of the conveyor system (16) in the lower region of the dynamic rack (16) couples directly to a service opening (34) of the dynamic rack (16).

8. The system (10) of any one of claims 1 to 7, wherein the gantry robot (14) includes two picking units (44), wherein each of the picking units (44) is coupled to a different movable crossbeam (48) so that the picking units (44) are movable independently from each other, and are capable of exchanging one of the shelves (20).

9. The system (10) of any one of claims 1 to 8, including a plurality of the dynamic racks (12) arranged in a longitudinal direction (X) and/or transverse direction (Y) of the dynamic racks (12), preferably without spacing, adjacent to each other,
wherein the gantry robot (14) is configured to exchange the storage devices (20), articles (13) and/or load carriers (36) between all of the dynamic racks (12) and the conveyor system (16), or among the dynamic racks (12).

10. The system (10) of claim 9, wherein the conveyor system (16) further includes a portion arranged in an upper section of the dynamic racks (12) and extends, preferably completely, along the transverse direction (Y) of the dynamic racks (12), which are arranged adjacent to each other in the transverse direction (Y).

11. The system (10) of any one of claims 1 to 10, wherein the picking unit (44) is movable along a mast in a vertical direction (Z) of the dynamic rack (12) for picking the storage devices (20), articles (13) and/or load carriers (36) at any height from the dynamic rack (12) and the conveyor system (16), wherein the mast is movable, by means of a carriage, along a movable crossbeam (48) of the gantry frame.

12. The system (10) of any one of claims 1 to 11, wherein each dynamic rack (12) comprises a circumferentially-closed housing (32), which is open, or openable, at the top.

13. The system (10) of any one of claims 1 to 12, wherein the dynamic rack is configured to move the storage devices (20) onto at least one picking-output level (30) of the dynamic rack (12) different to a highest possible storage level (50) of the dynamic rack (12), wherein the picking-output levels (30) are the only storage levels where stored articles (13) may be removed from the dynamic rack (12) for the purpose of conventional picking.

14. A method for moving articles (13) from a conveyor system (16) into a dynamic rack (12) by means of a gantry robot (14), wherein the dynamic rack (12) includes a stationary rack frame (24) and a plurality of vertically movable storage devices (18; 20, 22) so that the storage devices (18) are arranged vertically on top of each other in an adaptable arrangement, wherein each of the storage devices (18) is adapted to receive one or more of the articles (13) directly, or indirectly in one or more load carriers (36); wherein the gantry robot (14) includes a gantry frame (42) and a picking unit (44), wherein the picking unit (44) is coupled to the gantry frame (42) and movable along at least two axes (XYZ), and wherein the gantry frame (42) extends vertically beyond each of the dynamic racks (12), comprising the steps of:
moving a desired article (13), by means of the conveyor system (16), to the dynamic rack (12);
moving the picking unit (44) over the desired article (13) and directly, or indirectly, receiving the desired article (12) by means of the picking unit (44); and
moving the picking unit (44) together with the desired article (13) over the dynamic rack (12) and delivering the desired article (13) to the dynamic rack (12), when the desired article (13) has been received from the conveyor system (16);
wherein articles (13) are retrieved at the same time for the purpose of picking at a picking-output level (30) of the dynamic rack (12) different to the upper storage level (52, 54), and wherein the conveyor system (16) supplies the picking unit (44) of the gantry robot (14) with the storage devices (20), articles (13) and/or load carriers (36), wherein the conveyor system (16) comprises portions in an upper section of the dynamic rack (12), which supply the dynamic rack from above with new articles and extend along a longitudinal direction (X) and a transverse direction (Y) of the dynamic rack (12) adjacent to the dynamic rack (12) so that the picking unit (44) exchanges the storage devices (20), articles (13) and/or load carriers (36) with the portions of the conveyor system (16) substantially without lifting.

## Revendications

1. Système (10) permettant l'alimentation d'une étagère dynamique (12) avec des articles (13), dans lequel le système (10) présente :
l'étagère dynamique (12), laquelle est une étagère de type paternoster (26) ou un élévateur de stockage (28) et est conçue pour stocker et préparer les articles (13), dans lequel l'étagère dynamique (12) comprend une structure d'étagère (24) stationnaire et une pluralité de dispositifs de stockage (18 ; 20, 22) pouvant se déplacer verticalement, de sorte que les dispositifs de stockage (18) sont disposés verticalement les uns au-dessus des autres selon un agencement variable, dans lequel chacun des dispositifs de stockage (18) est adapté pour recevoir directement un ou plusieurs des articles (13) ou pour les recevoir indirectement dans un ou plusieurs supports de charge (36) ;
un robot portique (14) permettant le transport des dispositifs de stockage (20), articles (13) et/ou supports de charge (36) hors de l'étagère dynamique (12) et dans l'étagère dynamique (12), dans lequel le robot portique (14) comprend une structure de portique (42) et une unité de préhension (44), dans lequel l'unité de préhension (44) est accouplée à la structure de portique (42) et peut se déplacer le long d'au moins deux axes (X, Y, Z) ; et un moyen technique d'acheminement (16) permettant l'alimentation de l'unité de préhension (44) du robot portique (14) avec les dispositifs de stockage (20), articles (13) et/ou supports de charge (36), **caractérisé en ce que** le moyen technique d'acheminement (16) présente des sections dans une zone supérieure de l'étagère dynamique (12), lesquelles
sont conçues pour alimenter l'étagère dynamique avec de nouveaux articles par le haut, et
s'étendent le long d'une direction longitudinale (X) et d'une direction transversale (Y) de l'étagère dynamique (12) à proximité de l'étagère dynamique (12), de sorte que l'unité de préhension (44) peut échanger sensiblement sans course les dispositifs de stockage (20), articles (13) et/ou supports de charge (36) avec les sections du moyen technique d'acheminement (16) ;
dans lequel la structure de portique (42) fait saillie verticalement depuis l'étagère dynamique (12), de sorte que les dispositifs de stockage (20), articles (13) et/ou supports de charge (36) peuvent être échangés par le haut au moyen de l'unité de préhension (44) entre l'étagère dynamique (12) et le moyen technique d'acheminement (16).

2. Système (10) selon la revendication 1, dans lequel le robot portique (14) est conçu pour échanger de tels dispositifs de stockage (20), articles (13) et/ou supports de charge (36) positionnés à un niveau de stockage (54) occupé le plus élevé dans l'étagère dynamique (12), dans lequel le niveau de stockage (54) occupé le plus élevé dans l'étagère dynamique (12) est dépendant du remplissage.

3. Système (10) selon la revendication 2, dans lequel le niveau de stockage (54) occupé le plus élevé dans l'étagère dynamique (12) est un niveau de stockage (52) le plus élevé possible de l'étagère dynamique (12), dans lequel le niveau de stockage (52) le plus élevé possible est indépendant du remplissage.

4. Système (10) selon l'une des revendications 1 à 3, dans lequel l'étagère dynamique (12) est un élévateur de stockage (28) comprenant intérieurement un élément d'acheminement vertical (38) comportant un moyen de réception de charge (40) pouvant se déplacer verticalement,
dans lequel les dispositifs de stockage (18) pouvant se déplacer sont des rayonnages (20), en particulier de type tablette,
dans lequel la structure d'étagère (24) comprend en outre des éléments de réception (22) ne pouvant pas se déplacer et permettant le maintien des rayonnages (20),
dans lequel l'élément d'acheminement vertical (38) est disposé de manière stationnaire, de préférence au centre, par rapport à la structure d'étagère (24), de sorte que le moyen de réception de charge (40) peut déplacer les rayonnages (20) horizontalement dans les éléments de réception (22) pour le stockage et peut les déplacer horizontalement hors des éléments de réception (22) pour le déstockage et de sorte que le moyen de réception de charge (40) peut déplacer les rayonnages (20) verticalement jusqu'à un niveau de stockage (52) le plus élevé possible de l'étagère dynamique (12).

5. Système (10) selon l'une des revendications 1 à 4, dans lequel la structure de portique (42) comprend des longerons (46) supportés de préférence par au moins quatre éléments de soutien verticaux (50) stationnaires, dans lequel une barre transversale (48) est supportée par les longerons (46) de manière à pouvoir se déplacer dans la direction longitudinale (X) de l'étagère dynamique (12).

6. Système (10) selon la revendication 5, dans lequel le moyen technique d'acheminement (16) comprend en outre un élément d'acheminement vertical (60) qui relie les sections du moyen technique d'acheminement (16) dans la section supérieure de l'étagère dynamique (12) à une autre section du moyen technique d'acheminement (16) dans une zone inférieure de l'étagère dynamique (16).

7. Système (10) selon la revendication 6, dans lequel l'autre section du moyen technique d'acheminement (16) dans la zone inférieure de l'étagère dynamique (16) est accouplée directement à une ouverture de manipulation (34) de l'étagère dynamique (16).

8. Système (10) selon l'une des revendications 1 à 7, dans lequel le robot portique (14) comprend deux unités de préhension (44), dans lequel chacune des unités de préhension (44) est accouplée à une barre transversale (48) pouvant se déplacer différente, de sorte que les unités de préhension (44) peuvent se déplacer indépendamment l'une de l'autre et peuvent remplacer l'un des rayonnages (20).

9. Système (10) selon l'une des revendications 1 à 8, comprenant plusieurs des étagères dynamiques (12) disposées à proximité les unes des autres dans une direction longitudinale (X) et/ou une direction transversale (Y) des étagères dynamiques (12), de préférence sans espacement,
dans lequel le robot portique (14) est conçu pour échanger les dispositifs de stockage (20), articles (13) et/ou supports de charge (36) entre toutes les étagères dynamiques (12) et le moyen technique d'acheminement (16) ou sous les étagères dynamiques (12).

10. Système (10) selon la revendication 9, dans lequel le moyen technique d'acheminement (16) comprend en outre une section disposée dans la section supérieure des étagères dynamiques (12) et s'étendant, de préférence entièrement, le long de la direction transversale (Y) des étagères dynamiques (12) disposées à proximité les unes des autres dans la direction transversale (Y).

11. Système (10) selon l'une des revendications 1 à 10, dans lequel l'unité de préhension (44) peut se déplacer le long d'un mât dans une direction verticale (Z) de l'étagère dynamique (12) afin de saisir les dispositifs de stockage (20), articles (13) et/ou supports de charge (36) à une hauteur quelconque à partir de l'étagère dynamique (12) ainsi qu'à partir du moyen technique d'acheminement (16), dans lequel le mât peut se déplacer au moyen d'un coulisseau le long d'une barre transversale (48) pouvant se déplacer de la structure de portique.

12. Système (10) selon l'une des revendications 1 à 11, dans lequel chaque étagère dynamique (12) présente un boîtier (32) fermé de manière circonférentielle, lequel est ouvert ou peut être ouvert vers le haut.

13. Système (10) selon l'une des revendications 1 à 12, dans lequel l'étagère dynamique est conçue pour déplacer les dispositifs de stockage (20) vers au moins un niveau de sortie de préparation de commandes (30) de l'étagère dynamique (12), lequel niveau de sortie de préparation de commandes est différent d'un niveau de stockage (50) le plus élevé possible de l'étagère dynamique (12), dans lequel les niveaux de sortie de préparation de commandes (30) sont les seuls niveaux de stockage où des articles (13) stockés peuvent être retirés de l'étagère dynamique (12) pour la préparation de commandes ordinaire.

14. Procédé permettant le déplacement d'articles (13) d'un moyen technique d'acheminement (16) dans une étagère dynamique (12) au moyen d'un robot portique (14), dans lequel l'étagère dynamique (12) comprend une structure d'étagère (24) stationnaire et une pluralité de dispositifs de stockage (18 ; 20, 22) pouvant se déplacer verticalement, de sorte que les dispositifs de stockage (18) sont disposés verticalement les uns au-dessus des autres selon un agencement variable, dans lequel chacun des dispositifs de stockage (18) est adapté pour recevoir directement un ou plusieurs des articles (13) ou pour les recevoir indirectement dans un ou plusieurs supports de charge (36) ; dans lequel le robot portique (14) comprend une structure de portique (42) et une unité de préhension (44), dans lequel l'unité de préhension (44) est accouplée à la structure de portique (42) et peut se déplacer le long d'au moins deux axes (XYZ) et dans lequel la structure de portique (42) fait saillie verticalement depuis chacune des étagères dynamiques (12), comportant les étapes consistant à :
déplacer un article (13) souhaité au moyen du moyen technique d'acheminement (16) vers l'étagère dynamique (12) ;
déplacer l'unité de préhension (44) au-dessus de l'article (13) souhaité et recevoir directement ou indirectement l'article (12) souhaité au moyen de l'unité de préhension (44) ; et
déplacer l'unité de préhension (44) comportant l'article (13) souhaité au-dessus de l'étagère dynamique (12) et délivrer l'article (13) souhaité à l'étagère dynamique (12) lorsque l'article (13) souhaité a été reçu par le moyen technique d'acheminement (16) ;
dans lequel, simultanément, des articles (13) sont prélevés à des fins de préparation de commandes à un niveau de sortie de préparation de commandes (30) de l'étagère dynamique (12) qui est différent du niveau de stockage (52, 54) supérieur, et dans lequel le moyen technique d'acheminement (16) alimente l'unité de préhension (44) du robot portique (14) avec les dispositifs de stockage (20), articles (13) et/ou supports de charge (36), dans lequel le moyen technique d'acheminement (16) présente des sections dans une zone supérieure de l'étagère dynamique (12), lesquelles alimentent l'étagère dynamique avec de nouveaux articles par le haut et s'étendent le long d'une direction longitudinale (X) et d'une direction transversale (Y) de l'étagère dynamique (12) à proximité de l'étagère dynamique (12), de sorte que l'unité de préhension (44) échange sensiblement sans course les dispositifs de stockage (20), articles (13) et/ou supports de charge (36) avec les sections du moyen technique d'acheminement (16).
